# EUROPÄISCHE PATENTSCHRIFT

(11) **EP 2 422 518 B1**
(45) Veröffentlichungstag und Bekanntmachung des Hinweises auf die Patenterteilung: **13.06.2018**
(21) Anmeldenummer: 10718921.9
(22) Anmeldetag: 21.04.2010
(51) Int. Cl.: H04N 7/18, B61L 15/00

(54) **VORRICHTUNG UND VERFAHREN ZUR ÜBERTRAGUNG VON VIDEODATEN AN EIN FAHRZEUG**
METHOD AND APPARATUS FOR THE TRANSMISSION OF VIDEO DATA TO A VEHICLE
DISPOSITIF ET PROCÉDÉ DE TRANSFERT DE DONNÉES VIDÉO À UN VÉHICULE

(30) Priorität: 23.04.2009 DE 102009018607
(43) Veröffentlichungstag der Anmeldung: 29.02.2012
(73) Patentinhaber: Siemens Aktiengesellschaft, 80333 München (DE)
(72) Erfinder: BUTTERER, Albrecht, 76646 Bruchsal (DE); ERNST, Jürgen, 77815 Bühl/Baden (DE); MEYERS, Carlo, 76275 Ettlingen (DE); URLACHER, Jean-Paul, 67480 Forstfeld (FR)
(86) Internationale Anmeldenummer: PCT/EP2010/055232
(87) Internationale Veröffentlichungsnummer: WO 2010/122039

(56) Entgegenhaltungen:
- US-A1- 2001 050 709
- US-A1- 2007 040 070
- CISCO: "Americas Headquarters: Radio Channel Frequencies", , 1 January 2008 (2008-01-01), pages 1-6, XP055315657, SAN JOSE, CA, US Retrieved from the Internet: URL:http://www.cisco.com/c/en/us/td/docs/r outers/access/3200/software/wireless/3200W irelessConfigGuide/RadioChannelFrequencies .pdf [retrieved on 2016-11-02]

## Beschreibung

Bei bekannten Verkehrssystemen, wie beispielsweise einem Schienenverkehrssystem, werden sowohl im Nahverkehrsbereich, d.h. beispielsweise im Zusammenhang mit U- oder S-Bahnen, als auch im Fernverkehrsbereich stationäre Videokameras für die Videoüberwachung auf der Strecke sowie im Bereich von Haltestellen oder Bahnsteigen eingesetzt.

Die vorliegende Erfindung betrifft eine Vorrichtung zur Übertragung von Videodaten an ein Fahrzeug, mit stationären Videokameras zum Erfassen von Videodaten, zumindest einer stationären Sendeeinrichtung zum funkbasierten Senden der erfassten Videodaten, einer Positionsbestimmungseinrichtung zum Bestimmen der Position des Fahrzeugs und einer fahrzeugseitigen Empfangseinrichtung zum funkbasierten Empfangen der gesendeten Videodaten zumindest einer der Videokameras.

Entsprechende Vorrichtungen sind aus den veröffentlichten Patentanmeldungen US 2007/0040070 A1 und US 2001/0050709 A1 bekannt.

Der vorliegenden Erfindung liegt die Aufgabe zugrunde, eine besonders leistungsfähige und zugleich vielseitig einsetzbare Vorrichtung der genannten Art anzugeben.

Diese Aufgabe wird erfindungsgemäß gelöst durch eine Vorrichtung zur Übertragung von Videodaten an ein Fahrzeug, mit stationären Videokameras zum Erfassen von Videodaten, zumindest einer stationären Sendeeinrichtung zum funkbasierten Senden der erfassten Videodaten, einer Positionsbestimmungseinrichtung zum Bestimmen der Position des Fahrzeugs und einer fahrzeugseitigen Empfangseinrichtung zum funkbasierten Empfangen der gesendeten Videodaten zumindest einer der Videokameras, wobei die zumindest eine Sendeeinrichtung derart ausgebildet ist, dass die Videodaten für zumindest einen Teil der Videokameras auf unterschiedlichen Funkkanälen gesendet werden, eine fahrzeugseitige Steuereinrichtung zum Auswählen zumindest eines der Funkkanäle in Abhängigkeit von der bestimmten Position des Fahrzeugs vorgesehen ist und die fahrzeugseitige Empfangseinrichtung zum funkbasierten Empfangen der auf dem zumindest einen ausgewählten Funkkanal gesendeten Videodaten der zumindest einen der Videokameras ausgebildet ist.

Die erfindungsgemäße Vorrichtung zur Übertragung von Videodaten an ein Fahrzeug weist stationäre Videokameras zum Erfassen von Videodaten auf. Dabei können die stationären Videokameras beispielsweise im Bereich von Haltestellen beziehungsweise Bahnsteigen oder auch entlang einer von dem Fahrzeug befahrenen Strecke angeordnet sein.

Darüber hinaus weist die erfindungsgemäße Vorrichtung zumindest eine stationäre Sendeeinrichtung zum funkbasierten Senden der erfassten Videodaten auf. Dabei ist die zumindest eine Sendeeinrichtung derart ausgebildet, dass die Videodaten für zumindest einen Teil der Videokameras auf unterschiedlichen Funkkanälen gesendet werden. Dies bedeutet, dass die Sendeeinrichtung beziehungsweise die Sendeeinrichtungen in ihrer Gesamtheit mehrere, unterschiedliche Funkkanäle unterstützt beziehungsweise unterstützen. Dabei ist die Sendeeinrichtung beziehungsweise sind die Sendeeinrichtungen derart ausgebildet, dass die Videodaten für zumindest einen Teil der Videokameras auf unterschiedlichen Funkkanälen gesendet werden. Dies ist so zu verstehen, dass beispielsweise die Videodaten einer ersten Videokamera über einen ersten Funkkanal und die Videodaten einer zweiten Videokamera über einen zweiten Funkkanal übertragen werden können. Darüber hinaus ist es beispielsweise jedoch auch denkbar, dass die Videodaten einer ersten Videokamera über einen ersten sowie über einen zweiten Funkkanal übertragen werden und die Videodaten einer zweiten Videokamera über einen dritten oder einen dritten und einen vierten Funkkanal. Des Weiteren wird erfindungsgemäß auch die Situation umfasst, dass die Videodaten einer ersten Gruppe von Videokameras über einen ersten Funkkanal und die Videodaten einer zweiten Gruppe von Videokameras über einen zweiten Funkkanal gesendet werden, so dass ein einzelner Funkkanal auch zur Übertragung der Videodaten von mehreren Videokameras dienen kann. Wesentlich ist hierbei somit lediglich, dass unterschiedliche Funkkanäle derart verwendet werden, dass für zumindest einen Teil der Videokameras die Videodaten auf unterschiedlichen Funkkanälen gesendet werden, so dass durch eine Auswahl zumindest eines der Funkkanäle auch eine Auswahl der Videodaten erfolgt beziehungsweise möglich ist.

Die erfindungsgemäße Vorrichtung umfasst darüber hinaus eine Positionsbestimmungseinrichtung zum Bestimmen der Position des Fahrzeugs. Dabei kann die Positionsbestimmungseinrichtung stationäre und/oder fahrzeugseitige Komponenten umfassen.

Des Weiteren ist eine fahrzeugseitige Steuereinrichtung zum Auswählen zumindest eines der Funkkanäle in Abhängigkeit von der bestimmten Position des Fahrzeugs vorgesehen. Dies bedeutet, dass die Steuereinrichtung derart ausgebildet ist, dass sie anhand der von der Positionsbestimmungseinrichtung bestimmten Position des Fahrzeugs ein oder mehrere der verfügbaren Funkkanäle auswählt. Über diesen zumindest einen ausgewählten Funkkanal werden die gesendeten Videodaten zumindest einer der Videokameras von einer fahrzeugseitigen Empfangseinrichtung funkbasiert empfangen.

Die erfindungsgemäße Vorrichtung ist vorteilhaft, da sie eine Übertragung der Videodaten der stationären Videokameras über mehrere, unterschiedliche Funkkanäle ermöglicht. Dabei ist es anhand der Position des jeweiligen Fahrzeugs möglich, fahrzeugseitig automatisch jeweils die für diese Fahrzeugposition relevanten beziehungsweise vorgesehenen Videodaten zu empfangen. Dies bietet den Vorteil, dass eine Übertragung der Videodaten beispielsweise in einer Situation mit mehreren Gleisen oder Bahnsteigen jeweils selektiv für die in den jeweiligen Gleisen lokalisierten Fahrzeuge erfolgen kann. Darüber hinaus ist die erfindungsgemäße Vorrichtung vorteilhafterweise für unterschiedliche Verkehrssysteme einsetzbar, d.h. beispielsweise sowohl im Bereich der spurgebundenen beziehungsweise schienengebundenen als auch im Bereich der nicht spurgebundenen Verkehrssysteme. So kann es sich bei dem Fahrzeug beispielsweise um eine Lokomotive, ein Triebfahrzeug, einen PKW oder LKW, ein Flugzeug oder ein Schiff handeln.

Gemäß einer besonders bevorzugten Weiterbildung ist die erfindungsgemäße Vorrichtung derart ausgestaltet, dass die Positionsbestimmungseinrichtung mehrere an unterschiedlichen Positionen angeordnete stationäre Transponder umfasst sowie zumindest ein fahrzeugseitiges Lesegerät zum Auslesen einer Kennung des jeweiligen Transponders, und die Steuereinrichtung zum Auswählen des zumindest einen Funkkanals in Abhängigkeit von der ausgelesenen Kennung ausgebildet ist. Eine entsprechende Ausprägung der Positionsbestimmungseinrichtung ist vorteilhaft, da mittels stationärer Transponder und eines fahrzeugseitigen Lesegerätes eine punktgenaue Lokalisierung des Fahrzeugs möglich ist. Anhand der aus dem jeweiligen stationären Transponder ausgelesenen Kennung ist es der Steuereinrichtung hierbei möglich, beispielsweise anhand einer entsprechenden Datentabelle den in der jeweiligen Situation zu verwendenden zumindest einen Funkkanal auszuwählen, so dass die fahrzeugseitige Empfangseinrichtung in der Folge diesen zumindest einen ausgewählten Funkkanal zum funkbasierten Empfang der gesendeten Videodaten der zumindest einen der Videokameras verwenden kann. Vorteilhafterweise sind Transponder als solche darüber hinaus in robuster und zuverlässiger, auch für Anwendungen beispielsweise im Bereich der Eisenbahnautomatisierung geeigneter Ausführungsform verfügbar.

Bei den Transpondern kann es sich grundsätzlich um Transponder einer beliebigen, für sich bekannten Technologie handeln. Vorzugsweise ist die erfindungsgemäße Vorrichtung derart ausgestaltet, dass der Transponder ein RFID-Transponder und das Lesegerät ein RFID-Lesegerät ist. Dies ist vorteilhaft, da Transponder in Form von RFID-Transpondern und Lesegeräte in Form von RFID-Lesegeräten weit verbreitet und vergleichsweise kostengünstig am Markt verfügbar sind.

Gemäß einer weiteren besonders bevorzugten Ausführungsform ist die erfindungsgemäße Vorrichtung derart ausgeprägt, dass die Positionsbestimmungseinrichtung
eine fahrzeugseitige Satellitenempfangseinrichtung zur satellitengestützten Bestimmung der Position des Fahrzeugs umfasst. Dies bietet den Vorteil, dass im freien Umfeld und bei vergleichsweise niedrigeren Anforderungen hinsichtlich der Genauigkeit der Positionsbestimmung mittels der fahrzeugseitigen Satellitenempfangseinrichtung die Position des Fahrzeugs bestimmt und der zumindest eine Funkkanal seitens der Steuereinrichtung in Abhängigkeit von der satellitengestützt bestimmten Position des Fahrzeugs ausgewählt werden kann. Vorteilhafterweise sind hierbei keine stationären beziehungsweise streckenseitigen Einrichtungen zur Bestimmung der Position des Fahrzeugs erforderlich.

Es sei darauf hingewiesen, dass die Positionsbestimmungseinrichtung selbstverständlich auch unterschiedliche Komponenten zur Bestimmung der Position des Fahrzeugs umfassen kann. So kann die Positionsbestimmungseinrichtung beispielsweise mehrere an unterschiedliche Positionen angeordnete stationäre Transponder und entsprechende fahrzeugseitige Lesegeräte sowie zusätzlich hierzu eine fahrzeugsseitige Satellitenempfangseinrichtung umfassen. Dies bietet den Vorteil, dass beispielsweise im Bereich von Haltestellen, an denen eine satellitengestützte Bestimmung der Position des Fahrzeugs gegebenenfalls nicht mit ausreichender Genauigkeit oder aufgrund von beispielsweise durch Gebäude verursachten Empfangsstörungen auch überhaupt nicht erfolgen kann, mittels stationärer Transponder eine punktgenaue Bestimmung der Position des Fahrzeugs möglich ist. Außerhalb des Bereichs von Haltestellen, d.h. insbesondere auf freier Strecke, kann es in Abhängigkeit von den jeweiligen Randbedingungen und Umständen jedoch durchaus ausreichend und hinsichtlich der Realisierungskosten wesentlich günstiger sein, dass seitens der Positionsbestimmungseinrichtung mit der fahrzeugseitigen Satellitenempfangseinrichtung die Position des Fahrzeugs satellitengestützt bestimmt wird. Dies bietet insbesondere den Vorteil, dass eine Montage von stationären Transpondern in den entsprechenden Bereichen vermieden wird.

Im Rahmen der erfindungsgemäßen Vorrichtung kann die funkbasierte Übertragung der Videodaten grundsätzlich gemäß einem beliebigen Übertragungsprotokoll beziehungsweise Übertragungsstandard erfolgen. Gemäß einer weiteren besonders bevorzugten Weiterbildung ist die erfindungsgemäße Vorrichtung zur funkbasierten Übertragung der Videodaten gemäß einem zur digitalen Ausstrahlung von Radio- und/oder Fernsehprogrammen vorgesehenen Übertragungsstandard, insbesondere DVB-T, ausgebildet. Die Verwendung eines zur digitalen Ausstrahlung von Radio- und/oder Fernsehprogrammen sowie gegebenenfalls von Datensignalen vorgesehenen Übertragungsstandards, wie beispielsweise DVB-T (Digital Video Broadcasting Terrestrial), bietet den Vorteil, dass es sich hierbei üblicherweise um Standards handelt, die bereits in bewährter Form eine gesicherte mehrkanaltaugliche Videoübertragung ermöglichen. So handelt es sich etwa bei DVB-T vorteilhafterweise um ein speziell für die Übertragung von Videodaten optimiertes Übertragungsverfahren, das COFDM (Coded Orthogonal Frequency Division Multiplex) als Modulationsverfahren verwendet. In anderen Länder sind entsprechende Übertragungsverfahren zur digitalen, erdgebundenen Ausstrahlung beziehungsweise Verbreitung von digitalen Radio-, Fernseh- und/oder Datensignalen beispielsweise unten den Namen ATSC (Advanced Television Systems Committee), ISDB (Integrated Services Digital Broadcasting) oder DTMB (Digital Terrestrial Multimedia Broadcast) bekannt.

Vorzugsweise kann die erfindungsgemäße Vorrichtung auch derart weitergebildet sein, dass die Empfangseinrichtung mehrere Empfangsantennen aufweist. Die Realisierung der Empfangseinrichtung mit mehreren Empfangsantennen, d.h. als so genannter "Diversity-Empfänger", bietet den Vorteil, dass eine stabile und zuverlässige Übertragung der Videodaten, insbesondere auch bei hohen Geschwindigkeiten des Fahrzeugs, gewährleistet wird.

Gemäß einer weiteren besonders bevorzugten Ausführungsform ist die erfindungsgemäße Vorrichtung derart ausgestaltet, dass sie zumindest eine fahrzeugseitige Anzeigeeinrichtung zum Anzeigen der empfangenen Videodaten aufweist. Dies ist vorteilhaft, da hierdurch Betriebspersonal des Fahrzeugs, d.h. insbesondere einem Fahrzeugführer, eine Betrachtung und Auswertung der übertragenen Videodaten ermöglicht wird. Dabei können sich die Videodaten beispielsweise auf einen Haltebereich oder sonstige kritische Bereiche einer Fahrstrecke des Fahrzeugs beziehen.

Vorzugsweise kann die erfindungsgemäße Einrichtung weiterhin auch derart ausgestaltet sein, dass die Steuereinrichtung in Abhängigkeit von der bestimmten Position des Fahrzeugs zum Einschalten und/oder Abschalten des Anzeigens der Videodaten auf der zumindest einen Anzeigeeinrichtung ausgebildet ist. Dies ist vorteilhaft, da hierdurch die Möglichkeit geschaffen wird, dass beispielsweise dem Fahrzeugführer des Fahrzeugs die Videodaten der zumindest einen Videokamera ausschließlich dann angezeigt werden, wenn sich das Fahrzeug in einem vorbestimmten Positionsbereich aufhält. Dies bedeutet, dass das Anzeigen der Videodaten auf der zumindest einen Anzeigerichtung in Abhängigkeit von der bestimmten Position des Fahrzeugs auf- beziehungsweise eingeschaltet werden kann und in der Folge wiederum in Abhängigkeit von der bestimmten Position des Fahrzeugs ab- beziehungsweise ausgeschaltet werden kann. Hierdurch kann beispielsweise sichergestellt werden, dass ein Fahrzeugführer auf der Fahrt zwischen zwei Haltestellen nicht durch in dieser Situation letztlich nicht relevante Videodaten von der Beobachtung der Strecke sowie seiner übrigen Tätigkeit abgelenkt wird.

Grundsätzlich kann die zumindest eine Anzeigeeinrichtung an einem beliebigen Ort in oder an dem Fahrzeug angeordnet sein. Gemäß einer weiteren besonders bevorzugten Ausführungsform der erfindungsgemäßen Vorrichtung ist die zumindest eine Anzeigeeinrichtung im Führerstand des Fahrzeugs angeordnet. Hierdurch wird dem Fahrzeugführer auf besonders einfache Art und Weise eine Überwachung der Anzeigeeinrichtung und damit des durch die zumindest eine stationäre Videokamera überwachten Bereichs ermöglicht.

Die erfindungsgemäße Vorrichtung kann in Bezug auf beliebige Arten von Fahrzeugen eingesetzt werden. Dies schließt beispielsweise Kraftfahrzeuge beliebiger Art und Ausführung, Flugzeuge oder Schiffe mit ein. Gemäß einer besonders bevorzugten Weiterbildung der erfindungsgemäßen Vorrichtung sind die fahrzeugseitigen Einrichtungen in einem Fahrzeug in Form eines Schienenfahrzeugs angeordnet. Bei den fahrzeugseitigen Einrichtungen handelt es sich um die Einrichtungen der Vorrichtung, die an oder in dem jeweiligen Fahrzeug vorgesehen sind. Dies schließt somit insbesondere die Steuereinrichtung, die Empfangseinrichtung sowie gegebenenfalls die Positionsbestimmungsreinrichtung beziehungsweise Komponenten derselben ein. Die erfindungsgemäße Vorrichtung wird somit vorzugsweise im Zusammenhang mit Fahrzeugen in Form von Schienenfahrzeugen angewendet. Dies ist vorteilhaft, da Schienenfahrzeuge sowie gegebenenfalls andere Arten spurgebundener Fahrzeuge aufgrund der Spurführung einer eindeutig vorgegebenen Strecke folgen. Hierdurch bedingt ist es mit vergleichsweise geringem Aufwand möglich, an entsprechenden Punkten stationäre Videokameras zur Überwachung von insbesondere sicherheitskritischen Vorgängen und Abläufen vorzusehen.

Die erfindungsgemäße Vorrichtung kann grundsätzlich zur Übertragung der Videodaten an ein stehendes Fahrzeug ausgebildet sein. Gemäß einer besonders bevorzugten Weiterbildung der erfindungsgemäßen Vorrichtung ist die Vorrichtung jedoch alternativ oder zusätzlich hierzu zur Übertragung der Daten an ein fahrendes Fahrzeug ausgebildet. Dies bietet den Vorteil, dass der Einsatzbereich der erfindungsgemäßen Vorrichtung erheblich erweitert wird. So kann beispielsweise im Falle eines Fahrzeugs in Form eines Schienenfahrzeugs eine Überwachung eines Bahnsteigs oder eines Gleises vorteilhafterweise auch während der Fahrt des Fahrzeugs erfolgen.

Die übertragenen Videodaten können sich entsprechend den vorstehenden Ausführungen beispielsweise auf seitlich oder auch in Fahrtrichtung gesehen hinter dem Fahrzeug liegende örtliche Bereiche beziehen. Dies schließt beispielsweise insbesondere auch Haltestellen beziehungsweise Bahnsteige oder Bahnhöfe ein. Vorzugsweise ist die erfindungsgemäße Vorrichtung derart ausgeprägt, dass die Vorrichtung zur Übertragung von auf einen in Fahrtrichtung des Fahrzeugs voraus liegenden Streckenabschnitt bezogenen Videodaten ausgebildet ist. Dies bietet den Vorteil, dass dem Fahrzeugführer des fahrenden Fahrzeugs in Echtzeit ein Einblick ermöglicht wird, der über den normalen Sicht- beziehungsweise Sehbereich hinaus reicht. Dies ist insbesondere aus sicherheitstechnischer Sicht von großer Bedeutung. So kann eine noch verborgene Gefahr beziehungsweise ein entsprechender Gefahrpunkt auf der Strecke, z.B. in Tunnels, auf Brücken, gefährlichen Übergängen, Kurven oder auch Baustellen, früher im Fahrzeug auf der zumindest einen Anzeigeeinrichtung angezeigt werden, wodurch für den Fahrzeugführer die Möglichkeit besteht, anhand des Videobildes zu erkennen, dass gegebenenfalls eine Gefahr vorliegt, wobei aufgrund der vergleichsweise frühzeitigen Erkennung noch eine rechtzeitige Reaktion des Fahrers ermöglicht wird.

Hinsichtlich des Verfahrens liegt der vorliegenden Erfindung die Aufgabe zugrunden, ein besonders leistungsfähiges und zugleich vielseitig einsetzbares Verfahren zur Übertragung von Videodaten an ein Fahrzeug anzugeben.

Diese Aufgabe wird erfindungsgemäß gelöst durch ein Verfahren zur Übertragung von Videodaten an ein Fahrzeug, insbesondere ein Schienenfahrzeug, wobei durch stationäre Videokameras Videodaten erfasst werden, die erfassten Videodaten funkbasiert gesendet werden, wobei die Videodaten für zumindest einen Teil der Videokameras auf unterschiedlichen Funkkanälen gesendet werden, die Position des Fahrzeugs bestimmt wird, fahrzeugseitig zumindest einer der Funkkanäle in Abhängigkeit von der bestimmten Position des Fahrzeugs ausgewählt wird und die auf dem zumindest einen ausgewählten Funkkanal gesendeten Videodaten zumindest einer der Videokameras fahrzeugseitig empfangen werden.

Die Vorteile des erfindungsgemäßen Verfahrens entsprechen im Wesentlichen denjenigen der erfindungsgemäßen Vorrichtung, so dass diesbezüglich auf die entsprechenden vorstehenden Ausführungen verwiesen wird. Dies gilt in entsprechender Weise auch für den Großteil der im Folgenden genannten bevorzugten Weiterbildungen des erfindungsgemäßen Verfahrens, so dass auch diesbezüglich gegebenenfalls auf die Erläuterungen im Zusammenhang mit der entsprechenden bevorzugten Weiterbildung der erfindungsgemäßen Vorrichtung verwiesen wird.

Vorzugsweise kann das erfindungsgemäße Verfahren derart ausgeprägt sein, dass die Position des Fahrzeugs dadurch bestimmt wird, dass fahrzeugseitig eine Kennung eines stationären Transponders, insbesondere eines RFID-Transponders, ausgelesen wird und der zumindest eine Funkkanal in Abhängigkeit von der ausgelesenen Kennung ausgewählt wird.

Gemäß einer weiteren besonders bevorzugten Ausführungsform ist das erfindungsgemäße Verfahren derart ausgestaltet, dass die Position des Fahrzeugs satellitengestützt fahrzeugseitig bestimmt wird.

Vorzugsweise kann das erfindungsgemäße Verfahren auch derart ablaufen, dass die Videodaten gemäß einem zur digitalen Ausstrahlung von Radio- und/oder Fernsehprogrammen vorgesehenen Übertragungsstandard, insbesondere DVB-T, funkbasiert übertragen werden.

Gemäß einer besonders bevorzugten Weiterbildung ist das erfindungsgemäße Verfahren derart ausgestaltet, dass die empfangenen Videodaten fahrzeugseitig angezeigt werden.

Vorzugsweise kann das erfindungsgemäße Verfahren weiterhin auch derart ausgeprägt sein, dass das fahrzeugseitige Anzeigen der empfangenen Videodaten in Abhängigkeit von der bestimmten Position des Fahrzeugs erfolgt.

Gemäß einer weiteren besonders bevorzugten Ausführungsform des erfindungsgemäßen Verfahrens werden die Daten an ein fahrendes Fahrzeug übertragen.

Vorzugsweise kann das erfindungsgemäße Verfahren auch derart ausgestaltet sein, dass auf einen in Fahrtrichtung des Fahrzeugs voraus liegenden Streckenabschnitt bezogene Videodaten übertragen werden.

Gemäß einer weiteren besonders bevorzugten Ausgestaltung ist das erfindungsgemäße Verfahren derart ausgeprägt, dass auf einen Bereich einer Haltestelle eines spurgebundenen, insbesondere schienengebundenen Verkehrssystems bezogene Videodaten übertragen werden. Dies bietet den Vorteil, dass insbesondere dem Fahrzeugführer, etwa im Rahmen der Abfertigung des Fahrzeugs an der jeweiligen Haltestelle, eine Überwachung der Haltestelle sowie insbesondere des Einstiegsbereichs des Fahrzeugs ermöglicht wird. Mittels der stationären Videokameras, die in diesem Fall vorzugsweise derart angeordnet sind, dass sie den Bereich des jeweiligen Bahnsteigs sowie der Bahnsteigkante und der Türen des Fahrzeugs überwachen, ist es dem Fahrzeugführer hierbei somit möglich, eine sichere Abfertigung des Fahrzeugs auch ohne zusätzliches Personal im Bereich der Haltestelle durchzuführen.

Alternativ oder zusätzlich hierzu kann das erfindungsgemäße Verfahren vorteilhafterweise auch derart ausgestaltet sein, dass auf einen Verlade- und/oder Abladevorgang des Fahrzeugs bezogene Videodaten übertragen werden. Dies ist vorteilhaft, da hierdurch bei in der Industrie häufig vorkommenden Verlade- und Abladevorgängen, wie z.B. im Baugewerbe, bei der Müllablieferung, der Betankung bei Raffinerien oder auch im Containerverkehr, die Einhaltung von sicherheitstechnischen Bestimmungen und Arbeitsschutzrichtlinien gewährleistet werden kann. So sind beispielsweise Fahrzeuge in Form von großen LKWs meist zu unübersichtlich, um den Verlade- beziehungsweise Abladebereich in allen auftretenden Situationen allein mit einer Rückkamera vom Fahrerhaus komplett überblicken zu können. Teilweise kann dabei die Situation vorliegen, dass aus Sicherheitsgründen stationäre Videokameras in Form von Überwachungskameras an den Verlade- beziehungsweise Abladestellen bereits vorhanden sind, die eine Detaileinsicht sowie einen Gesamtüberblick der Anlage beziehungsweise des jeweiligen Vorgangs zeigen beziehungsweise ermöglichen. Üblicherweise können entsprechende Videodaten jedoch bislang lediglich in einer Leitzentrale angezeigt beziehungsweise aufgeschaltet werden. Durch Anwendung des erfindungsgemäßen Verfahrens ist es hierbei nunmehr möglich, entsprechende Videodaten funkbasiert in die Fahrerkabine des jeweiligen Fahrzeugs zu übertragen. Durch die Bestimmung der Position des Fahrzeugs wird es hierbei insbesondere bei größeren Anlagen mit mehreren Ablade- beziehungsweise Verladeplätzen vorteilhafterweise ermöglicht, jeweils automatisch die richtigen, d.h. auf den jeweiligen Vorgang bezogenen Videodaten, in das jeweilige Fahrzeug zu übertragen. Dies bietet den Vorteil, dass der Fahrer vorteilhafterweise selbst den vollen Überblick über den jeweiligen Vorgang erhält und somit unmittelbar in den Prozess eingreifen kann, ohne dass hierfür zusätzliches Personal erforderlich wäre.

Im Folgenden wird die Erfindung anhand von Ausführungsbeispielen näher erläutert. Hierzu zeigt
- Figur 1: zur Erläuterung eines ersten Ausführungsbeispiels eine erste schematische Skizze mit einem Fahrzeug in Form eines Schienenfahrzeugs,
- Figur 2: zur Erläuterung eines zweiten Ausführungsbeispiels eine zweite schematische Skizze mit einem Fahrzeug in Form eines Schienenfahrzeugs,
- Figur 3: zur Erläuterung eines dritten Ausführungsbeispiels eine dritte schematische Skizze mit Fahrzeugen in Form von Schienenfahrzeugen im Bereich einer Haltestelle,
- Figur 4: zur Erläuterung eines vierten Ausführungsbeispiels eine vierte schematische Skizze und
- Figur 5: zur Erläuterung eines fünften Ausführungsbeispiels eine fünfte schematische Skizze mit einem Fahrzeug in Form eines Schienenfahrzeugs.

In den Figuren werden aus Gründen der Übersichtlichkeit für gleiche beziehungsweise im Wesentlichen gleich wirkende Komponenten identische Bezugszeichen verwendet.

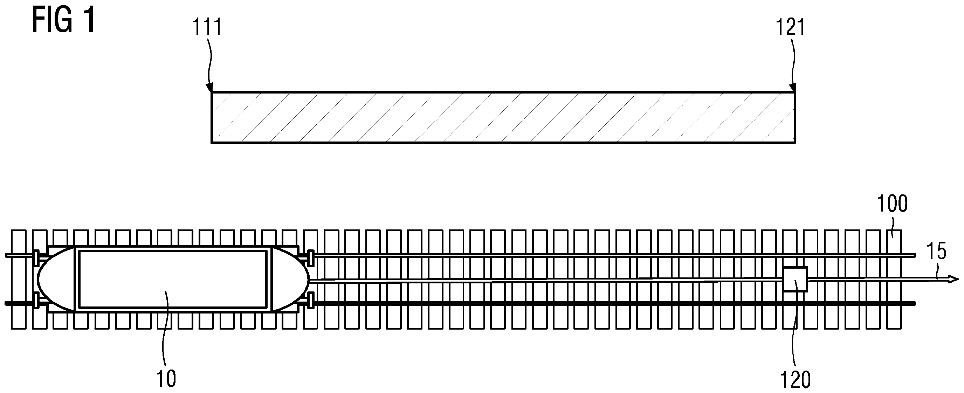

Figur 1 zeigt zur Erläuterung eines ersten Ausführungsbeispiels eine erste schematische Skizze mit einem Fahrzeug in Form eines Schienenfahrzeugs. Dargestellt ist ein Fahrzeug 10 in Form eines Schienenfahrzeugs, das sich entlang einer Fahrtrichtung 15 auf einem Gleis 100 bewegt. Dabei sei angenommen, dass zwischen zwei Streckenpunkten 111 und 121 eine Übertragung von Videodaten von in Figur 1 aus Gründen der Übersichtlichkeit nicht dargestellten stationären Videokameras an das Fahrzeug 10 gewünscht ist.

Hierzu ist streckenseitig neben den stationären Videokameras zum Erfassen der Videodaten zumindest eine stationäre Sendeeinrichtung zum funkbasierten Senden der erfassten Videodaten vorgesehen, wobei die zumindest eine Sendeeinrichtung derart ausgebildet ist, dass die Videodaten für zumindest einen Teil der Videokameras auf unterschiedlichen Funkkanälen gesendet werden. Darüber hinaus ist eine Positionsbestimmungseinrichtung zum Bestimmen der Position des Fahrzeugs vorgesehen, von der in Figur 1 ein stationärer Transponder 120 in Form eines RFID-Transponders beziehungsweise "RFID-Tags" gezeigt ist. Des Weiteren sei angenommen, dass auch im Bereich des Streckenpunktes 111 ein weiterer entsprechender, in Figur 1 durch das Fahrzeug 10 verdeckter Transponder in Form eines weiteren RFID-Transponders vorgesehen ist.

Mittels eines in Figur 1 nicht dargestellten fahrzeugseitigen Lesegerätes ist es nun möglich, bei Überfahrt des Fahrzeugs 10 über den jeweiligen Transponder eine Kennung des jeweiligen Transponders auszulesen. Da der Ort beziehungsweise die Position der stationären Transponder bekannt ist, erlaubt dies eine mittelbare oder unmittelbare Bestimmung der Position des Fahrzeugs. Hierbei ist es grundsätzlich ausreichend, dass anhand der ausgelesenen Kennung erkannt wird, dass sich das Fahrzeug 10 im Bereich des betreffenden Transponders aufhält. Anhand dieser Information wird es einer fahrzeugseitigen Steuereinrichtung ermöglicht, zumindest einen der zur Verfügung stehenden Funkkanäle auszuwählen und eine zum funkbasierten Empfang der Videodaten vorgesehene fahrzeugseitige Empfangseinrichtung zu veranlassen, den betreffenden zumindest einen ausgewählten Funkkanal zum Empfangen der Videodaten zu verwenden. Dabei kann die fahrzeugseitige Steuereinrichtung beispielsweise selbst den jeweiligen Funkkanal der fahrzeugseitigen Empfangseinrichtung schalten. Alternativ hierzu ist es auch denkbar, dass die Steuereinrichtung lediglich ein Signal beziehungsweise eine Nachricht mit der entsprechenden Nummer des zu verwendenden Funkkanals beziehungsweise mit den entsprechenden Nummern der zu verwendenden Funkkanäle an die Empfangseinrichtung übermittelt, oder die Empfangseinrichtung und die Steuereinrichtung zu einer Komponente vereint sind.

Unter Verwendung des zumindest einen ausgewählten Funkkanals erfolgt zwischen den Streckenpunkten 111 und 121 eine in der Figur 1 durch eine entsprechende Schraffur angedeutete Übertragung von Videodaten zumindest einer der Videokameras. Mittels einer Anzeigeeinrichtung können die fahrzeugseitig empfangenen Videodaten hierbei dem Fahrzeugführer des Fahrzeugs 10 angezeigt werden. Bei Erreichen beziehungsweise aufgrund des Erreichens des Transponders 120 wird seitens der fahrzeugseitigen Steuereinrichtung erkannt, dass eine weitere Übertragung der Videodaten nicht erforderlich beziehungsweise gewünscht ist. In Folge dessen wird von der Steuereinrichtung der Empfang der Videodaten auf dem zumindest einen ausgewählten Funkkanal und/oder die Anzeige der empfangenen Videodaten auf der fahrzeugseitigen Anzeigeeinrichtung gestoppt.

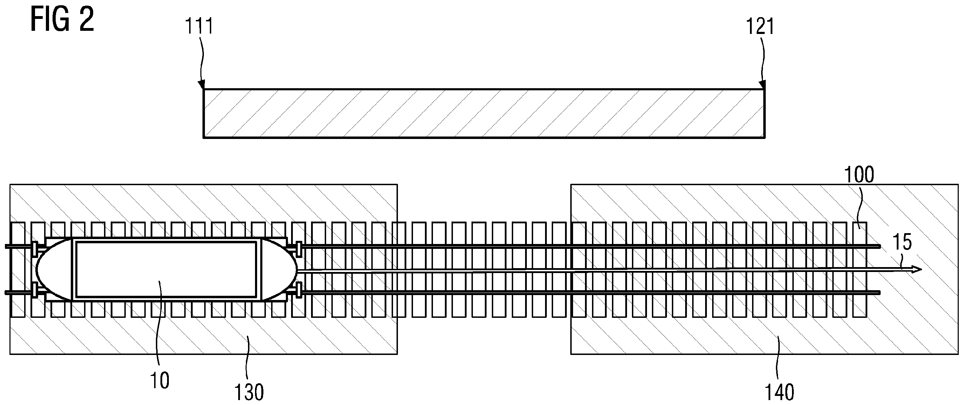

Figur 2 zeigt zur Erläuterung eines zweiten Ausführungsbeispiels eine zweite schematische Skizze mit einem Fahrzeug in Form eines Schienenfahrzeugs. Die Darstellung der Figur 2 entspricht im Wesentlichen derjenigen der Figur 1 mit dem Unterschied, dass die Positionsbestimmungseinrichtung bei dem Ausführungsbeispiel der Figur 2 zumindest in dem gezeigten Bereich keine stationären Transponder aufweist.

Stattdessen umfasst die Positionsbestimmungseinrichtung eine fahrzeugseitige Satellitenempfangseinrichtung zur satellitengestützten Bestimmung der Position des Fahrzeugs 10. Mittels dieser, in Figur 2 aus Gründen der Übersichtlichkeit nicht dargestellten Satellitenempfangseinrichtung ist es der Positionsbestimmungseinrichtung des Fahrzeugs 10 möglich, unabhängig von weiteren stationären Komponenten eine Bestimmung der Position des Fahrzeugs durchzuführen und anhand der derart bestimmten Position des Fahrzeugs 10 wiederum zumindest einen der Funkkanäle auszuwählen. In Figur 2 ist dies durch entsprechende Ortsbereiche 130, 140 angedeutet, innerhalb derer das Fahrzeug beziehungsweise seine Positionsbestimmungseinrichtung erkennt, dass sich das Fahrzeug an einer vorbestimmten Position aufhält. Bei dem Ausführungsbeispiel der Figur 2 sei hierbei angenommen, dass das Fahrzeug von links kommend in den Ortsbereich 130 einfährt und hieraufhin in etwa beim Streckenpunkt 111 der zugeordnete zumindest eine Funkkanal ausgewählt und die Übertragung von Videodaten gestartet wird. Dies ist ausgehend vom Streckenpunkt 111 analog zur Darstellung in Figur 1 durch eine entsprechende Schraffur angedeutet.

Beim Einfahren in den Ortsbereich 140, d.h. etwa im Bereich des Streckenpunktes 121, wird seitens der fahrzeugseitigen Steuereinrichtung nunmehr erkannt, dass sich das Fahrzeug wiederum in einen vorbestimmten Ortsbereich hinein bewegt hat. Im vorliegenden Fall erkennt die Steuereinrichtung anhand der betreffenden Positionsdaten oder auch anhand der Abfolge der Ortsbereiche, d.h. anhand des Erreichens des Ortsbereichs 130 und des zeitlich darauffolgenden Erreichens des Ortsbereichs 140, dass im Bereich des Streckenpunktes 121 keine Umschaltung des Funkkanals beziehungsweise der Funkkanäle gewünscht beziehungsweise erforderlich ist. Stattdessen schaltet die Steuereinrichtung bei Erkennen des Erreichens des Streckenpunktes 121 eine zur Darstellung der übertragenen Videodaten verwendete Anzeigeeinrichtung des Fahrzeugs 10 ab, so dass die Anzeige der Videodaten ab diesem Punkt eingestellt beziehungsweise gestoppt wird. Dies kann durch ein entsprechendes Einwirken auf die Empfangseinrichtung oder durch unmittelbare Einwirkung auf die Anzeigeeinrichtung selbst erfolgen. Somit ermöglicht es das positionsabhängige Ein- beziehungsweise Abschalten des Anzeigens der zumindest einen Anzeigevorrichtung, dass einem Fahrzeugführer des Fahrzeugs 10 lediglich in ausgewählten Bereichen die Videodaten auf der zumindest einen Anzeigeeinrichtung angezeigt werden. Bei entsprechenden Bereichen kann es sich beispielsweise um eine Haltestelle handeln.

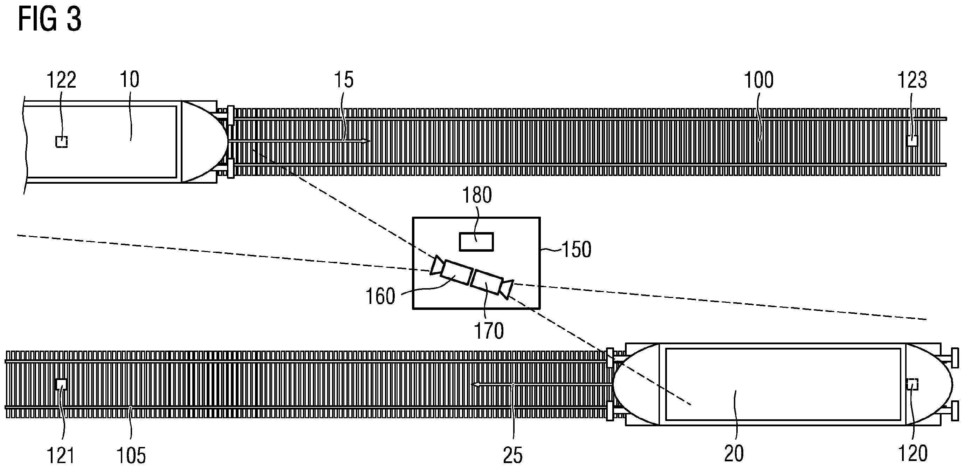

Figur 3 zeigt zur Erläuterung eines dritten Ausführungsbeispiels eine dritte schematische Skizze mit Fahrzeugen in Form von Schienenfahrzeugen im Bereich einer Haltestelle. Gezeigt ist ein Bereich einer Haltestelle mit Fahrzeugen 10 und 20 in Form von Schienenfahrzeugen, die sich auf Gleisen 100 beziehungsweise 105 in entgegen gesetzter Fahrtrichtung 15 beziehungsweise 25 bewegen.

Im Bereich der Haltestelle sind zwischen den Gleisen 100 beziehungsweise 105 jeweils an beiden Enden der dargestellten Station beziehungsweise Haltestelle stationäre Transponder 120, 121, 122 und 123 angeordnet. Zum besseren Verständnis sind hierbei auch die in der dargestellten Situation unter dem jeweiligen Fahrzeug 10 beziehungsweise 20 angeordneten Transponder 120 beziehungsweise 122 gezeigt.

Stationsseitig ist darüber hinaus eine stationäre Einrichtung 150 erkennbar, die stationäre Videokameras 160 und 170 sowie eine stationäre Sendeeinrichtung 180 zum funkbasierten Senden der erfassten Videodaten der Videokameras 160 und 170 umfasst.

Entsprechend der Darstellung der Figur 3 ist die Videokamera 160 auf den Bereich des Fahrzeugs 10 und die Videokamera 170 auf dem Bereich des Fahrzeugs 20 ausgerichtet. Durch die Verwendung unterschiedlicher Frequenzkanäle seitens der Sendeeinrichtung 180 zur Übertragung der Videodaten der jeweiligen Videokamera 160 beziehungsweise 170 an fahrzeugseitige Empfangseinrichtungen der Fahrzeuge 10 beziehungsweise 20 wird es nunmehr ermöglicht, dass durch jedes Fahrzeug 10 beziehungsweise 20 automatisch die Videodaten der Videokamera 160 beziehungsweise 170 empfangen sowie angezeigt werden können, welche sich auf den Ortsbereich beziehen, in dem sich das jeweilige Fahrzeug 10 beziehungsweise 20 aufhält. Hierbei wird seitens des jeweiligen Fahrzeugs 10 beziehungsweise 20 an einer von dem Transponder 122 beziehungsweise 120 empfangenen Kennung der Ort, d.h. insbesondere das Gleis sowie gegebenenfalls die Fahrtrichtung 15 beziehungsweise 25, des jeweiligen Fahrzeugs 10 beziehungsweise 20 erkannt. In Abhängigkeit von der empfangenen Kennung des jeweiligen Transponders 122 beziehungsweise 120 wird die jeweilige Empfangseinrichtung des betreffenden Fahrzeugs 10 beziehungsweise 20 derart auf einen entsprechenden Funkkanal eingestellt, dass seitens des Fahrzeugs 10 die Videodaten der Videokamera 160 und seitens des Fahrzeugs 20 die Videodaten der Videokamera 170 empfangen und angezeigt werden.

Bei Überfahren des Transponders 123 durch das Fahrzeug 10 beziehungsweise des Transponders 121 durch das Fahrzeug 20 wird die Aufschaltung der jeweiligen Videodaten auf die jeweilige Anzeigeeinrichtung in dem Fahrzeug 10 beziehungsweise 20 gestoppt beziehungsweise angehalten. Dies ist zweckmäßig, da zumindest die Videodaten der Videokameras 160 und 170 bei Verlassen der jeweiligen Haltestelle für den betreffenden Fahrzeugführer nicht mehr relevant sind und daher eine Anzeige der entsprechenden Videodaten lediglich eine Ablenkung für den Fahrzeugführer darstellen würde.

Die Übertragung der Videodaten über die jeweiligen Funkkanäle erfolgt vorteilhafterweise gemäß dem Kommunikationsstandards DVB-T, da es sich hierbei um einen speziell zur Übertragung von Videodaten optimierten und diesbezüglich bewährten Kommunikationsstandard handelt.

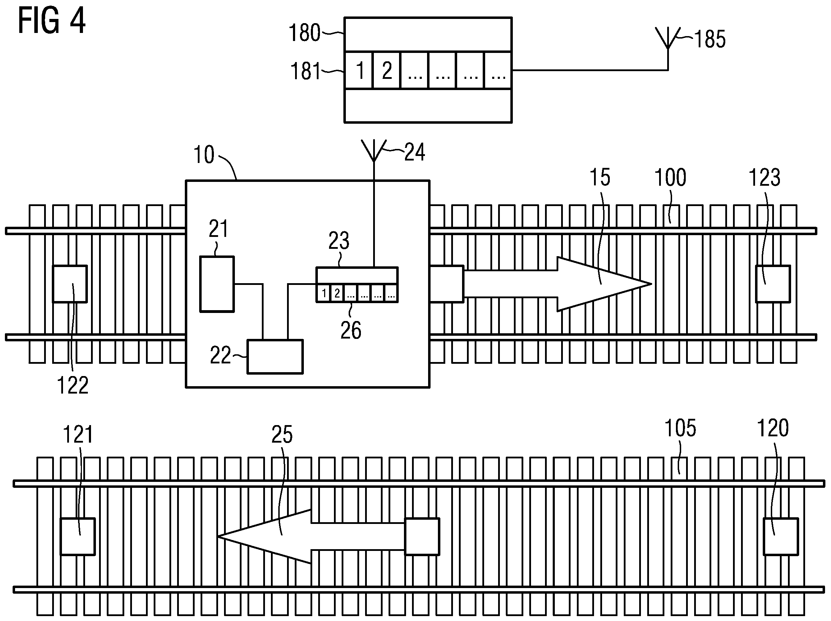

Figur 4 zeigt zur Erläuterung eines vierten Ausführungsbeispiels eine vierte schematische Skizze. Die in Figur 4 gezeigte Situation entspricht im Wesentlichen derjenigen der Figur 3, wobei aus Gründen der Übersichtlichkeit lediglich ein Fahrzeug 10 gezeigt ist. Gemäß der Darstellung der Figur 4 weist das Fahrzeug 10 ein Lesegerät 21 zum Auslesen einer Kennung des jeweiligen Transponders, d.h. im vorliegenden Fall der Transponder 122 und 123, auf. An das Lesegerät 21 ist eine Steuereinrichtung 22 angebunden, die in Abhängigkeit von der aus dem Transponder 122 ausgelesenen Kennung, d.h. in Abhängigkeit von der hierdurch bestimmten Position des Fahrzeugs 10, zumindest einen Funkkanal zum Übertragen von Videodaten von stationären Videokameras auswählt. Dabei wird eine fahrzeugseitige Empfangseinrichtung 23 durch die Steuereinrichtung 22 derart eingestellt, dass zumindest einer der in Figur 4 im Bereich der Empfangseinrichtung 23 mit Nummern 1, 2... angedeuteten Funkkanäle, die in ihrer Gesamtheit mit dem Bezugszeichen 26 gekennzeichnet sind, ausgewählt wird.

Das Fahrzeug 10 weist darüber hinaus eine an die Empfangseinrichtung 23 angebundene Antenne 24 auf, bei der es sich vorzugsweise um eine Antenneneinrichtung mit mehreren Empfangsantennen handelt. Durch eine entsprechende Antennendiversität wird vorteilhafterweise der Empfang, insbesondere bei fahrendem Fahrzeug 10, verbessert.

Gemäß der Darstellung der Figur 4 weist auch die Sendeeinrichtung 180 eine Antenne 185 auf. Dabei ist durch entsprechende Kanalnummern 1, 2, ..., die mit dem Bezugszeichen 181 gekennzeichnet sind, wiederum angedeutet, dass die Sendeeinrichtung 180 mehrere Funkkanäle, die beispielsweise durch unterschiedliche Frequenzen bestimmt sein können, unterstützt.

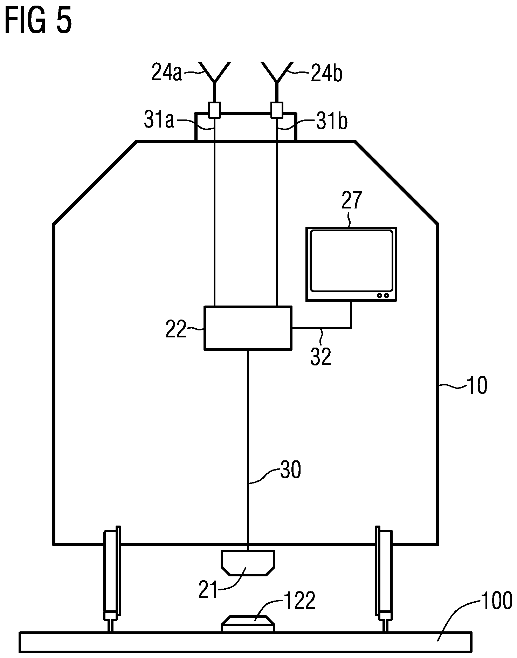

Figur 5 zeigt zur Erläuterung eines fünften Ausführungsbeispiels eine fünfte schematische Skizze mit einem Fahrzeug in Form eines Schienenfahrzeugs. Gezeigt ist ein Fahrzeug 10, das ein Lesegerät 21 zum Auslesen eines streckenseitigen beziehungsweise stationären Transponders 122 aufweist. Das fahrzeugseitige Lesegerät 21 ist über ein Datenkabel 30, das durch den Boden des Fahrzeugs 10 geführt ist, mit einer fahrzeugseitigen Steuereinrichtung 22 verbunden.

Bei Überfahrt des Fahrzeugs 10 über den Transponder 122 wird durch das Lesegerät 21 eine Kennung aus dem Transponder 122 ausgelesen und diese Kennung über das Datenkabel 30 an die Steuereinrichtung 22 übermittelt, die weiterhin mittels Koaxialkabeln 31a und 31b an im Dachbereich des Fahrzeugs 10 angeordnete Empfangsantennen 24a und 24b angebunden ist.

In Abhängigkeit von der jeweiligen aus dem Transponder 122 ausgelesenen Kennung wird es nun der Steuereinrichtung 22 ermöglicht, eine Empfangseinrichtung, die entweder im Bereich der Empfangsantennen 24a und 24b angeordnet oder auch als Bestandteil der Steuereinrichtung 22 ausgeführt sein kann, derart zu schalten, dass ein für den jeweiligen Ort vorgesehener Funkkanal beziehungsweise mehrere entsprechende Funkkanäle zum Empfang von Daten von stationären Videokameras verwendet werden. Die entsprechenden empfangenen Videodaten können von der Empfangseinrichtung beziehungsweise der Steuereinrichtung 22 auf einer Anzeigeeinrichtung 27 in Form eines Monitors zur Anzeige gebracht werden.

Entsprechend den vorstehenden Ausführungen ermöglichen es das erfindungsgemäße Verfahren sowie die erfindungsgemäße Vorrichtung beziehungsweise ihre beschriebenen Ausführungsbeispiele, die Videodaten beziehungsweise Video-Livebilder verschiedener stationärer Videokameras über eine Funkübertragung automatisch ab einer definierten Fahrzeugposition in ein Fahrzeug zu übertragen und auf einer Anzeigeeinrichtung, etwa in Form eines Videomonitors, beispielsweise beim Fahrer des Fahrzeugs darzustellen. Hierdurch wird im Fahrzeug vorteilhafterweise ein direkter "Live-Einblick" etwa in einen kommenden Streckenabschnitt beziehungsweise in das aktuelle Geschehen am Ziel beziehungsweise am Standort, d.h. beispielsweise an einem Bahnsteig, ermöglicht. Dabei kann die Übertragung der Videodaten vorteilhafterweise mittels DVB-T Funkübertragung mit einer oder mit mehreren stationären, d.h. ortsfesten, Sendeeinrichtungen sowie steuerbaren mobilen Empfangseinrichtungen je Fahrzeug erfolgen. Hierbei kann eine Übertragung der Videodaten beispielsweise im Frequenzband zwischen 5725 und 5875 MHz erfolgen. Damit eine stabile Videoübertragung auch bei höheren Geschwindigkeiten gewährleistet werden kann, ist die Empfangseinrichtung vorteilhafterweise mit einem so genannten "Diversity-Empfänger" mit zumindest zwei Empfangsantennen ausgestattet.

Durch ein vergleichsweise einfaches, hochvariables und robustes RFID-Lesegerät im Fahrzeug werden beim Erkennen und Lesen eines auf der Strecke beziehungsweise im Gleis montierten Transponders, etwa in Form eines RFID-Tags, die erforderlichen Daten an eine Video-Empfangs- und Auswerteeinheit in Form einer Empfangseinrichtung beziehungsweise Steuereinrichtung geliefert, die auch als eine gemeinsame Komponente ausgeführt sein können.

Alternativ zur Verwendung von Transpondern, etwa in Verbindung mit der RFID-Technik, kann auf freier Strecke bei etwas niedrigeren Positionsanforderungen im Bereich von etwa 10 bis 15 Metern auch eine satellitengestützte Ortsbestimmung, etwa unter Verwendung der GPS-Satellitentechnik, eingesetzt werden, die entsprechend der definierten GPS-Ortskoordinaten eine fahrzeugseitige Bestimmung der Fahrzeugposition ermöglicht und die entsprechenden Daten an die Steuereinrichtung liefert.

Entsprechend den vorstehenden Ausführungen ist das erfindungsgemäße Verfahren darüber hinaus für unterschiedlichste Situationen einsetzbar. Dies betrifft einerseits eine videobasierte und automatisierte Zugabfertigung. Hierbei werden die Videodaten der stationären Videokameras vorteilhafterweise in ein fahrendes Fahrzeug in Form des Zuges übertragen und zwecks automatisierter und durch den Fahrer selbst abgesicherter Zugabfertigung beim Fahrer dargestellt. Die automatische Auf- und Abschaltung des Videobildes von unterschiedlichen Bahnsteigen an einen Monitor im fahrenden und/oder stehenden Zug kann hierbei etwa durch die Verwendung stationärer Transponder je nach Haltestelle an fest definierten Ein- und Ausschaltpositionen erfolgen.

Vorzugsweise erfolgt die Übertragung der Videodaten über einen mehrkanaligen DVB-T-Sender in Form der Sendeeinrichtung zu einer Empfangseinrichtung im Zug, die abhängig von der Position des jeweiligen Transponders die Bildaufschaltung aktiviert und anhand der Kennung des jeweiligen Transponders den dem betreffenden Gleis zugeordneten DVB-T-Videokanal einschaltet. Der Zeitpunkt für das Ein- und Ausschalten des Videobildes beim Fahrer wird somit vorteilhafterweise allein durch den Montagepunkt im Gleis vor und hinter der Haltestelle bestimmt. Während der Fahrt zwischen den Haltestellen wird vorteilhafterweise kein Bild dargestellt, so dass Monitor beispielsweise dunkel ist.

Neben einer Verwendung für die automatisierte Zugabfertigung ist das erfindungsgemäße Verfahren beispielsweise auch zur mobilen Videoüberwachung von Streckenabschnitten im freien Umfeld geeignet. Hierbei ist es, beispielsweise mittels einer satellitengestütztes Ortsbestimmung möglich, anhand von zuvor gespeicherten Ortskoordinaten ebenso automatisch das richtige Videobild beziehungsweise den richtigen Funkkanal auszuwählen und rechtszeitig das jeweilige Bild in einem fahrenden Fahrzeug aufzuschalten, so dass ein Fahrzeugführer beispielsweise eines Zuges das Bild beziehungsweise die Bilder zum Beispiel aus einem Tunnel bereits vor der Tunneleinfahrt dargestellt bekommt.

Neben den zuvor geschilderten Anwendungen, die insbesondere im Bereich des spurgebundenen beziehungsweise schienengebundenen Verkehrs vorteilhaft sind, können das beschriebene Verfahren sowie die entsprechende Vorrichtung auch in anderen Bereichen eingesetzt werden. Dies betrifft beispielsweise die mobile gesteuerte Videoüberwachung von Abladevorgängen. Hierbei können für die jeweilige Ablage- beziehungsweise Verladestelle spezifische Videodaten stationärer Videokameras in Abhängigkeit von der Position, beispielsweise eines LKWs, die beispielsweise anhand von entsprechenden Transpondern erkannt werden kann, in das jeweilige Fahrzeug übertragen werden. Aufgrund der Bestimmung der Position des Fahrzeugs wird hierbei vorteilhafterweise jeweils das richtige Videobild, d.h. die Videodaten der für den entsprechenden Vorgang relevanten Videokamera beziehungsweise Videokameras, in das jeweilige Fahrzeug übertragen. Hierdurch wird gewährleistet, dass der Fahrer selbst einen vollständigen Überblick über das Geschehen erhält und erforderlichenfalls auch ohne zusätzliches Personal unmittelbar in den Verlade- beziehungsweise Abladevorgang eingreifen kann.

## Patentansprüche

1. Vorrichtung zur Übertragung von Videodaten an ein Fahrzeug (10, 20), mit
- stationären Videokameras (160, 170) zum Erfassen von Videodaten,
- zumindest einer stationären Sendeeinrichtung (180) zum funkbasierten Senden der erfassten Videodaten,
- einer Positionsbestimmungseinrichtung zum Bestimmen der Position des Fahrzeugs (10, 20) und
- einer fahrzeugseitigen Empfangseinrichtung (23) zum funkbasierten Empfangen der gesendeten Videodaten zumindest einer der Videokameras (160, 170),
**dadurchgekennzeichnet,** dass
- die zumindest eine Sendeeinrichtung (180) derart ausgebildet ist, dass die Videodaten für zumindest einen Teil der Videokameras (160, 170) auf unterschiedlichen Funkkanälen (26, 181) gesendet werden, so dass durch eine Auswahl zumindest eines der Funkkanäle auch eine Auswahl der Videodaten erfolgt,
- eine fahrzeugseitige Steuereinrichtung (22) zum Auswählen zumindest eines der Funkkanäle (26, 181) in Abhängigkeit von der bestimmten Position des Fahrzeugs (10, 20) vorgesehen ist und
- die fahrzeugseitige Empfangseinrichtung (23) zum funkbasierten Empfangen der auf dem zumindest einen ausgewählten Funkkanal (26, 181) gesendeten Videodaten der zumindest einen der Videokameras (160, 170) ausgebildet ist.

2. Vorrichtung nach Anspruch 1,
**dadurch gekennzeichnet, dass**
- die Positionsbestimmungseinrichtung
- mehrere an unterschiedlichen Positionen angeordnete stationäre Transponder (120-123) umfasst sowie
- zumindest ein fahrzeugseitiges Lesegerät (21) zum Auslesen einer Kennung des jeweiligen Transponders, (120-123) und
- die Steuereinrichtung (22) zum Auswählen des zumindest einen Funkkanals (26, 181) in Abhängigkeit von der ausgelesenen Kennung ausgebildet ist.

3. Vorrichtung nach Anspruch 2,
**dadurch gekennzeichnet, dass** der Transponder (120-123) ein RFID-Transponder und das Lesegerät (21) ein RFID-Lesegerät ist.

4. Vorrichtung nach einem der vorangehenden Ansprüche,
**dadurch gekennzeichnet, dass** die Positionsbestimmungseinrichtung
eine fahrzeugseitige Satellitenempfangseinrichtung zur satellitengestützten Bestimmung der Position des Fahrzeugs (10, 20) umfasst.

5. Vorrichtung nach einem der vorangehenden Ansprüche,
**dadurch gekennzeichnet, dass** die Vorrichtung zur funkbasierten Übertragung der Videodaten gemäß einem zur digitalen Ausstrahlung von Radio- und/oder Fernsehprogrammen vorgesehenen Übertragungsstandard, insbesondere DVB-T, ausgebildet ist.

6. Vorrichtung nach einem der vorangehenden Ansprüche,
**dadurch gekennzeichnet, dass** die Empfangseinrichtung (23) mehrere Empfangsantennen (24; 24a, 24b) aufweist.

7. Vorrichtung nach einem der vorangehenden Ansprüche,
**dadurch gekennzeichnet, dass** die Vorrichtung zumindest eine fahrzeugseitige Anzeigeeinrichtung (27) zum Anzeigen der empfangenen Videodaten aufweist.

8. Vorrichtung nach Anspruch 7,
**dadurch gekennzeichnet, dass** die Steuereinrichtung (22) in Abhängigkeit von der bestimmten Position des Fahrzeugs (10, 20) zum Einschalten und/oder Abschalten des Anzeigens der Videodaten auf der zumindest einen Anzeigeeinrichtung (27) ausgebildet ist.

9. Vorrichtung nach Anspruch 7 oder 8,
**dadurch gekennzeichnet, dass** die zumindest eine Anzeigeeinrichtung (27) im Führerstand des Fahrzeugs (10, 20) angeordnet ist.

10. Vorrichtung nach einem der vorangehenden Ansprüche,
**dadurch gekennzeichnet, dass** die fahrzeugseitigen Einrichtungen (21, 22, 23, 24, 24a, 24b) in einem Fahrzeug in Form eines Schienenfahrzeugs angeordnet sind.

11. Vorrichtung nach einem der vorangehenden Ansprüche,
**dadurch gekennzeichnet, dass** die Vorrichtung zur Übertragung der Daten an ein fahrendes Fahrzeug (10, 20) ausgebildet ist.

12. Vorrichtung nach einem der vorangehenden Ansprüche,
**dadurch gekennzeichnet, dass** die Vorrichtung zur Übertragung von auf einen in Fahrtrichtung des Fahrzeugs (10, 20) voraus liegenden Streckenabschnitt bezogenen Videodaten ausgebildet ist.

13. Verfahren zur Übertragung von Videodaten an ein Fahrzeug (10, 20), insbesondere ein Schienenfahrzeug, wobei
- durch stationäre Videokameras (160, 170) Videodaten erfasst werden,
- die erfassten Videodaten funkbasiert gesendet werden, wobei die Videodaten für zumindest einen Teil der Videokameras (160, 170) auf unterschiedlichen Funkkanälen (26, 181) gesendet werden, so dass durch eine Auswahl zumindest eines der Funkkanäle auch eine Auswahl der Videodaten erfolgt,
- die Position des Fahrzeugs (10, 20) bestimmt wird,
- fahrzeugseitig zumindest einer der Funkkanäle (26, 181) in Abhängigkeit von der bestimmten Position des Fahrzeugs (120, 20) ausgewählt wird und
- die auf dem zumindest einen ausgewählten Funkkanal (26, 181) gesendeten Videodaten zumindest einer der Videokameras (160, 170) fahrzeugseitig empfangen werden.

14. Verfahren nach Anspruch 13,
**dadurch gekennzeichnet, dass** die Position des Fahrzeugs (10, 20) dadurch bestimmt wird, dass
- fahrzeugseitig eine Kennung eines stationären Transponders (120-123), insbesondere eines RFID-Transponders, ausgelesen wird und
- der zumindest eine Funkkanal (26, 181) in Abhängigkeit von der ausgelesenen Kennung ausgewählt wird.

15. Verfahren nach einem der Ansprüche 13 oder 14,
**dadurch gekennzeichnet, dass** die Position des Fahrzeugs (10, 20) satellitengestützt fahrzeugseitig bestimmt wird.

16. Verfahren nach einem der Ansprüche 13 bis 15,
**dadurch gekennzeichnet, dass** die Videodaten gemäß einem zur digitalen Ausstrahlung von Radio- und/oder Fernsehprogrammen vorgesehenen Übertragungsstandard, insbesondere DVB-T, funkbasiert übertragen werden.

17. Verfahren nach einem der Ansprüche 13 bis 16,
**dadurch gekennzeichnet, dass** die empfangenen Videodaten fahrzeugseitig angezeigt werden.

18. Verfahren nach Anspruch 17,
**dadurch gekennzeichnet, dass** das fahrzeugseitige Anzeigen der empfangenen Videodaten in Abhängigkeit von der bestimmten Position des Fahrzeugs (10, 20) erfolgt.

19. Verfahren nach einem der Ansprüche 13 bis 18,
**dadurch gekennzeichnet, dass** die Daten an ein fahrendes Fahrzeug (10, 20) übertragen werden.

20. Verfahren nach einem der Ansprüche 13 bis 19,
**dadurch gekennzeichnet, dass** auf einen in Fahrtrichtung des Fahrzeugs (10, 20) voraus liegenden Streckenabschnitt bezogene Videodaten übertragen werden.

21. Verfahren nach einem der Ansprüche 13 bis 20,
**dadurch gekennzeichnet, dass** auf einen Bereich einer Haltestelle eines spurgebundenen, insbesondere schienengebundenen Verkehrssystems bezogene Videodaten übertragen werden.

22. Verfahren nach einem der Ansprüche 13 bis 21,
**dadurch gekennzeichnet, dass** auf einen Verlade- und/oder Abladevorgang des Fahrzeugs (10, 20) bezogene Videodaten übertragen werden.

## Claims

1. Apparatus for the transmission of video data to a vehicle (10, 20), comprising
- stationary video cameras (160, 170) for capturing video data,
- at least one stationary transmitting device (180) for transmitting the captured video data in a radio-based manner,
- a position determining device for determining the position of the vehicle (10, 20), and
- a vehicle-side receiving device (23) for receiving the transmitted video data of at least one of the video cameras (160, 170) in a radio-based manner,
**characterized in that**
- the at least one transmitting device (180) is configured in such a way that the video data for at least one portion of the video cameras (160, 170) are transmitted on different radio channels (26, 181), such that by selecting at least one of the radio channels, the video data are also selected,
- provision is made of a vehicle-side control device (22) for selecting at least one of the radio channels (26, 181) depending on the determined position of the vehicle (10, 20), and
- the vehicle-side receiving device (23) is configured for receiving, in a radio-based manner, the video data of the at least one of the video cameras (160, 170) that are transmitted on the at least one selected radio channel (26, 181) .

2. Apparatus according to Claim 1,
**characterized in that**
- the position determining device comprises
- a plurality of stationary transponders (120-123) arranged at different positions and also
- at least one vehicle-side reader (21) for reading out an identifier of the respective transponder (120-123), and
- the control device (22) is configured for selecting the at least one radio channel (26, 181) depending on the identifier read out.

3. Apparatus according to Claim 2,
**characterized in that**
the transponder (120-123) is an RFID transponder and the reader (21) is an RFID reader.

4. Apparatus according to any of the preceding claims,
**characterized in that**
the position determining device comprises
a vehicle-side satellite receiving device for determining the position of the vehicle (10, 20) in a satellite-aided manner.

5. Apparatus according to any of the preceding claims,
**characterized in that**
the apparatus is configured for the radio-based transmission of the video data in accordance with a transmission standard provided for the digital broadcasting of radio and/or television programmes, in particular DVB-T.

6. Apparatus according to any of the preceding claims,
**characterized in that**
the receiving device (23) comprises a plurality of receiving antennas (24; 24a, 24b).

7. Apparatus according to any of the preceding claims,
**characterized in that**
the apparatus comprises at least one vehicle-side display device (27) for displaying the received video data.

8. Apparatus according to Claim 7,
**characterized in that**
the control device (22) is configured for switching on and/or switching off the display of the video data on the at least one display device (27) depending on the determined position of the vehicle (10, 20).

9. Apparatus according to Claim 7 or 8,
**characterized in that**
the at least one display device (27) is arranged in the driver's cab of the vehicle (10, 20).

10. Apparatus according to any of the preceding claims,
**characterized in that**
the vehicle-side devices (21, 22, 23, 24, 24a, 24b) are arranged in a vehicle in the form of a rail vehicle.

11. Apparatus according to any of the preceding claims,
**characterized in that**
the apparatus is configured for the transmission of the data to a travelling vehicle (10, 20).

12. Apparatus according to any of the preceding claims,
**characterized in that**
the apparatus is configured for the transmission of video data related to a route section situated ahead in the direction of travel of the vehicle (10, 20).

13. Method for the transmission of video data to a vehicle (10, 20), in particular a rail vehicle, wherein
- video data are captured by stationary video cameras (160, 170),
- the captured video data are transmitted in a radio-based manner, wherein the video data for at least one portion of the video cameras (160, 170) are transmitted on different radio channels (26, 181), such that by selecting at least one of the radio channels the video data are also selected,
- the position of the vehicle (10, 20) is determined,
- on the vehicle side at least one of the radio channels (26, 181) is selected depending on the determined position of the vehicle (120, 20), and
- the video data of at least one of the video cameras (160, 170) that are transmitted on the at least one selected radio channel (26, 181) are received on the vehicle side.

14. Method according to Claim 13,
**characterized in that**
the position of the vehicle (10, 20) is determined by
- an identifier of a stationary transponder (120-123), in particular of an RFID transponder, being read out on the vehicle side, and
- the at least one radio channel (26, 181) being selected depending on the identifier read out.

15. Method according to either of Claims 13 and 14,
**characterized in that**
the position of the vehicle (10, 20) is determined on the vehicle side in a satellite-aided manner.

16. Method according to any of Claims 13 to 15,
**characterized in that**
the video data are transmitted in a radio-based manner in accordance with a transmission standard provided for the digital broadcasting of radio and/or television programmes, in particular DVB-T.

17. Method according to any of Claims 13 to 16,
**characterized in that**
the received video data are displayed on the vehicle side.

18. Method according to Claim 17,
**characterized in that**
the received video data are displayed on the vehicle side depending on the determined position of the vehicle (10, 20).

19. Method according to any of Claims 13 to 18,
**characterized in that**
the data are transmitted to a travelling vehicle (10, 20).

20. Method according to any of Claims 13 to 19,
**characterized in that**
video data related to a route section situated ahead in the direction of travel of the vehicle (10, 20) are transmitted.

21. Method according to any of Claims 13 to 20,
**characterized in that**
video data related to a region of a stop of a track-bound, in particular rail-bound, traffic system are transmitted.

22. Method according to any of Claims 13 to 21,
**characterized in that**
video data related to a loading and/or unloading process for the vehicle (10, 20) are transmitted.

## Revendications

1. Système de transmission de données vidéo à un véhicule (10, 20), comprenant
- des caméras (160, 170) vidéo fixes de détection de données vidéo,
- au moins un dispositif (180) fixe d'émission, par radio des données vidéo détectées,
- un dispositif de détermination de position, pour déterminer la position du véhicule (10, 20) et
- un dispositif (23) de réception, du côté du véhicule, pour recevoir par radio les données vidéo envoyées d'au moins l'une des caméras (160, 170) vidéo,
**caractérisé en ce que**
- le au moins un dispositif (180) d'émission est constitué de manière à envoyer les données vidéo, pour au moins une partie des caméras (160, 170) vidéo, sur des canaux (26, 181) radio différents, de sorte que, par un choix d'au moins l'un des canaux radio, s'effectue aussi un choix des données vidéo,
- il est prévu un dispositif (22) de commande, du côté du véhicule, pour choisir au moins l'un des canaux (26, 181) radio en fonction de la position déterminée du véhicule (10, 20) et
- le dispositif (23) de réception, du côté du véhicule, est constitué pour la réception par radio des données vidéo, envoyées sur le au moins un canal (26, 181) radio choisi, de l'une au moins des caméras (160, 170) vidéo.

2. Système suivant la revendication 1,
**caractérisé en ce que**
- le dispositif de détection de position
- comprend plusieurs transpondeurs (120 à 123) fixes, disposés en des positions différentes, ainsi que
- au moins un appareil (21) de lecture, du côté du véhicule, pour lire une caractérisation du transpondeur (120 à 123) respectif et
- le dispositif (22) de commande est constitué pour choisir le au moins un canal (26, 181) radio en fonction de la caractérisation qui est lue.

3. Système suivant la revendication 2,
**caractérisé en ce que**
le transpondeur (120 à 123) est un transpondeur RFID et l'appareil (21) de lecture est un appareil de lecture RFID.

4. Système suivant l'une des revendications précédentes,
**caractérisé en ce que**
le dispositif de détermination de position comprend un dispositif de réception par satellite, du côté du véhicule, pour la détermination assistée par satellite de la position du véhicule (10, 20).

5. Système suivant l'une des revendications précédentes,
**caractérisé en ce que**
le système est constitué pour la transmission par radio des données vidéo suivant une norme de transmission, notamment DVB-T, prévue pour la diffusion numérique de programmes de radio et/ou de télévision.

6. Système suivant l'une des revendications précédentes,
**caractérisé en ce que**
le dispositif (23) de réception a plusieurs antennes (24; 24a, 24b) de réception.

7. Système suivant l'une des revendications précédentes, **caractérisé en ce que**
le système a au moins un dispositif (27) d'affichage, du côté du véhicule, pour afficher les données vidéo reçues.

8. Système suivant la revendication 7,
**caractérisé en ce que**
le dispositif (22) de commande, en fonction de la position déterminée du véhicule (10, 20), est constitué pour mettre et/ou supprimer l'affichage des données vidéo sur le au moins un dispositif (27) d'affichage.

9. Système suivant la revendication 7 ou 8,
**caractérisé en ce que**
le au moins un dispositif (27) d'affichage est disposé dans le poste du conducteur du véhicule (10, 20).

10. Système suivant l'une des revendications précédentes,
**caractérisé en ce que**
les dispositifs (21, 22, 23, 24, 24a, 24b), du côté du véhicule, sont disposés dans un véhicule sous la forme d'un véhicule ferroviaire.

11. Système suivant l'une des revendications précédentes,
**caractérisé en ce que**
le système de transmission des données est constitué sur un véhicule (10, 20) en marche.

12. Système suivant l'une des revendications précédentes,
**caractérisé en ce que**
le système de transmission est constitué pour la transmission de données vidéo se rapportant à une section de voie précédente dans le sens de marche du véhicule (10, 20).

13. Procédé de transmission de données vidéo à un véhicule (10, 20), notamment à un véhicule ferroviaire, dans lequel
- on détecte des données vidéo par des caméras (160, 170) vidéo fixes,
- on envoie par radio les données vidéo détectées, les données vidéo étant envoyées, pour au moins une partie des caméras (160, 170) vidéo, sur des canaux (26, 181) radio différents, de manière à effectuer, par un choix d'au moins l'un des canaux radio, également un choix des données vidéo,
- on détermine la position du véhicule (10, 20),
- on choisit, du côté du véhicule, au moins l'un des canaux (26, 181) radio, en fonction de la position déterminée du véhicule (10, 20) et
- on reçoit, du côté du véhicule, les données vidéo, envoyées sur le au moins un canal (26, 181) radio choisi, de l'une au moins des caméras (160, 170) vidéo.

14. Procédé suivant la revendication 13,
**caractérisé en ce que**
on détermine la position du véhicule (10, 20),
- en lisant, du côté du véhicule, une caractérisation d'un transpondeur (120 à 123) fixe, notamment d'un transpondeur RFID et
- on choisit le au moins un canal (26, 181) radio, en fonction de la caractérisation qui a été lue.

15. Procédé suivant l'une des revendications 13 ou 14,
**caractérisé en ce que**
l'on détermine la position du véhicule (10, 20), du côté du véhicule, avec assistance par satellite.

16. Procédé suivant l'une des revendications 13 à 15,
**caractérisé en ce que**
l'on transmet par radio les données vidéo, suivant une norme de transmission, notamment DVB-T, prévue pour la diffusion numérique de programmes de radio et/ou de programmes de télévision.

17. Procédé suivant l'une des revendications 13 à 16,
**caractérisé en ce que**
l'on affiche, du côté du véhicule, les données vidéo reçues.

18. Procédé suivant la revendication 17,
**caractérisé en ce que**
l'affichage du côté du véhicule, des données vidéo reçues, s'effectue en fonction de la position déterminée du véhicule (10, 20).

19. Procédé suivant l'une des revendications 13 à 18,
**caractérisé en ce que**
l'on transmets les données à un véhicule (10, 20) en marche.

20. Procédé suivant l'une des revendications 13 à 19,
**caractérisé en ce que**
l'on transmet des données vidéo se rapportant à une section de voie précédente dans le sens de marche du véhicule (10, 20).

21. Procédé suivant l'une des revendications 13 à 20,
**caractérisé en ce que**
l'on transmet des données vidéo se rapportant à un point d'arrêt d'un système de circulation guidé sur voie, notamment guidé sur rail.

22. Procédé suivant l'une des revendications 13 à 21,
**caractérisé en ce que**
l'on transmet des données vidéo se rapportant à une opération de chargement et/ou de déchargement du véhicule (10, 20).
